# EUROPEAN PATENT SPECIFICATION

(11) **EP 0 318 289 B1**
(45) Date of publication and mention of the grant of the patent: **07.02.1996**
(21) Application number: 88311141.1
(22) Date of filing: 24.11.1988
(51) Int. Cl.: G01N 27/00

(54) **Apparatus and method for detecting tunnel current and electro-chemical reaction**
Vorrichtung und Verfahren zur Feststellung eines Tunnelstroms und einer elektrochemischen Reaktion
Appareil et méthode pour détecter un courant d'effet tunnel et une réaction électrochimique

(30) Priority: 27.11.1987 JP 299548/87
(43) Date of publication of application: 31.05.1989
(73) Proprietor: SEIKO INSTRUMENTS INC., Tokyo 136 (JP)
(72) Inventor: Tomita, Eisuke, Koto-ku Tokyo (JP); Sakuhara, Toshihiko, Koto-ku Tokyo (JP); Itaya, Kingo, Dendai-shi Miyagi-ken (JP)
(74) Representative: Sturt, Clifford Mark

(56) References cited:
- JAPANESE JOURNAL OF APPLIED PHYSICS. vol. 26, no. 11, 1 November 1987, TOKYO JPpages L1853 - L1855 S.MORITA ET AL 'CONSTRUCTION OF A SCANNING TUNNELING MICROSCOPE FOR ELECTROCHEMICAL STUDIES'
- APPLIED PHYSICS LETTERS. vol. 49, no. 18, 3 November 1986, NEW YORK US pages1172 - 1174 R.SONNENFELD ; B.SCHARDT 'TUNNELING MICROSCOPY IN AN ELECTROCHEMICAL CELL : IMAGES OF AG PLATING'
- REVIEW OF SCIENTIFIC INSTRUMENTS. vol. 59, no. 11, 1 November 1988, NEW YORK US pages 2333 - 2336 M.M. DOVEK ET AL 'DESIGN OF A SCANNING TUNNELING MICROSCOPE FOR ELECTROCHEMICAL APPLICATIONS'

## Description

The present invention relates to an apparatus and a method for detecting tunnel current and electro-chemical reaction.

Techniques for regulating the potential of a sample constituting an electrode in an electro-chemical cell to control an electro-chemical reaction and for detecting the current generated in a sample are generally known and apparatus employing such techniques is commercially available, for example in a potentiostat and a polarograph.

A method of detecting a tunnel current by applying a voltage between a sample and a scanning tip is also generally used, and means for producing a surface image of the sample from such detected tunnel current are known in a scanning tunnelling microscope. Such a scanning tunnelling microscope is disclosed in U.S. patent No. 4,343,993 and carries out measurements under a super high vacuum. Recently, measurements in air and in a solution have also been possible.

Reviews of Modern Physics, vol 59, No. 3, July 1987, pages 615-625, G. Binnig et al.: "Scanning tunnelling microscopy - from birth to adolescence", describes the development of scanning tunnelling microscopy. An imaging mode is disclosed in which a probe tip is scanned across the surface of a sample at constant tunnel current. The tunnel current is maintained constant by adjusting the vertical position of the tip.

Applied Physics Letters, Vol. 49, No. 18, 3 November 1986, New York, pages 1172-1174, R. Sonnenfeld et al : "Tunnelling Microscopy in an Electrochemical Cell: Images of Ag Plating", discloses an experiment in which atomic features of a graphite substrate are observed, using a scanning tunnelling microscope, before Ag deposition and after stripping of the deposited Ag.

The Japanese Journal of Applied Physics, Vol. 26, No. 11, 1st November 1987, Tokyo, pages L1853-L1855 discloses apparatus for electro-chemical and tunnel current detection. No means are disclosed for controlling a potential difference between the scanning tip and the sample to maintain the tunnel current constant while scanning the surface of the sample simultaneously with detecting the electro-chemical reaction.

It is an object of the present invention to provide an improved apparatus and a method for detecting both tunnel current and an electro-chemical reaction.

In accordance with a first aspect of the present invention, there is provided apparatus for detecting both electro-chemical reaction and tunnel current, comprising an electro-chemical cell within which are disposed at least one electrode and a scanning tip arranged to co-operate, in use, with a sample in a solution in the electro-chemical cell and to generate a first output representing current flowing between the sample and the electrode due to electro-chemical reaction within the cell and a second output representing a tunnel current flowing between the scanning tip and the sample, and means for detecting the first and second outputs, wherein means for controlling a potential of the sample relative to the electrode and means for controlling a potential of the scanning tip relative to the electrode, are provided to maintain the tunnel current constant while scanning the surface of the sample simultaneously with detecting the electro-chemical reaction.

According to another aspect of the present invention there is provided a method for detecting both electro-chemical reaction and tunnel current in an electro-chemical cell containing at least one electrode, a scanning tip and a sample in a solution, comprising generating a first output representing current flowing between the sample and the electrode due to electro-chemical reaction within the cell, generating a second output representing a tunnel current flowing between the scanning tip and the sample, and detecting the first and second outputs; wherein a potential of the sample relative to the electrode and a potential of the scanning tip relative to the electrode are controlled in order to maintain the tunnel current constant while scanning the surface of the sample simultaneously with detecting the electro-chemical reaction by controlling a potential difference between the scanning tip and the sample.

In its preferred form, the apparatus includes an electro-chemical cell holding a scanning tip and at least one electrode in a solution with a sample to be investigated, first control means for controlling an electric potential of the sample, first detecting means for detecting the amount of current flowing between the sample and the electrode, means for positioning the scanning tip close to the sample surface to enable tunnel current to flow between the scanning tip and the sample surface, second control means for controlling a potential difference between the scanning tip and the sample, and second detecting means for detecting the tunnel current flowing due to the potential difference between the scanning tip and the sample.

The first and second control means may comprise means for scanning the electrode potential of the sample and means for scanning the electrode potential of the scanning tip respectively.

The apparatus may also include means for producing an image of the surface of the sample during electro-chemical reaction by keeping the potential difference between the sample and the scanning tip constant, and y scanning the surface of the sample with the scanning tip in the X-Y direction, while controlling the distance between the scanning tip and the sample in the direction of the Z axis so that the detected tunnel current is approximately constant, thereby three-dimensionally representing the position of the scanning tip.

As described, the electro-chemical cell includes the sample, a counter electrode, a reference electrode and the scanning tip in the solution and the electro-chemical measurement is carried out by a three electrode system using the sample, the counter electrode and the reference electrode. Simultaneously, the electrode potential of the scanning tip is regulated by the scanning tip, the counter electrode and the reference electrode, and the tunnel current produced by the potential difference between the sample and the scanning tip is detected, thereby enabling tunnel current measurement simultaneous with electro-chemical measurement. In addition, by supplying the detected tunnel current as a signal in a scanning tunnelling microscope, scanning tunnelling microscopy during electro-chemical measurement is achieved.

The behaviour of a sample electrode in a solution is very important in electro-chemistry, and has application in the electrolytic industry, in anti-corrosion and surface treatment techniques, in the plating industry and in the semi-conductor industry. Most electro-chemical reactions take place on the interface between an electrode and a solution, and the structure of the electrode surface holds the key to these reactions. It is therefore advantageous, for elucidating electro-chemical reactions such as electro-chemical deposition, corrosion of an electrode and various other reaction processes in relation to an electrode, to be able to observe the structure of the electrode surface on an atomic level.

The present invention as described below provides an apparatus and a method for observing the structure of an electrode surface on an atomic level under the regulation of the electrode potential.

Firstly, the described apparatus enables the electrode potential of a sample to be fixed to measure a tunnel current. As a result, the reactions taking place at the electrode are capable of being analysed from a change in the tunnel current. Also, by scanning the surface of the sample while keeping the tunnel current constant, changes in the structure of the surface of the sample can be analysed. A conventional scanning tunnelling microscope is only used to observe the surface of a sample in a solution, but the detection of a tunnel current under the regulation of the electrode potential of a sample enables the elucidation of the nature of electrode reactions and the identification of deposited material.

Secondly, when the electrode potential of the sample is scanned and the potential difference between the sample and the tip is kept constant, the operation is as follows. Electrode reactions may be analysed from a potential current curve (cyclic voltammogram). The use of the method and the apparatus of the present invention enables the tunnel current at each potential of the cyclic voltammogram to be measured and the structure of the surface of the sample at each potential to be obtained, thereby enabling the analysis of the electro-chemical reaction in correspondence with the structure of the electrode surface.

Finally, when the electrode potential of the scanning tip is scanned while making the electrode potential of the sample constant, STS (scanning tunnel spectroscopy) is possible under the regulation of the electrode potential of the sample, and the measurement of the work function of the surface of the sample, the identification of the material on the surface of the sample, and the measurement of the adsorbed atoms, the absorbed molecules, etc., as well as the atoms on the surface of the sample are also possible.

The invention is described further, by way of example, with reference to the accompanying drawings, in which:-
Figure 1 is a schematic view of apparatus according to the present invention for simultaneously detecting tunnel current and electro-chemical reaction;
Figures 2A to 2D show the production of a scanning tip used in the present invention;
Figures 3A to 3C are circuit diagrams showing examples of the circuitry employed in the apparatus of Figure 1;
Figure 4 shows a further example of the circuitry employed in Figure 1;
Figure 5 is a schematic view of an application of the apparatus of Figure 1 in a scanning tunnelling microscope;
Figure 6 is a cyclic voltammogram generated by the microscope shown in Figure 5; and
Figures 7A to 7C represent surface images of a sample generated in the microscope at different points of the cyclic voltammogram of Figure 6.

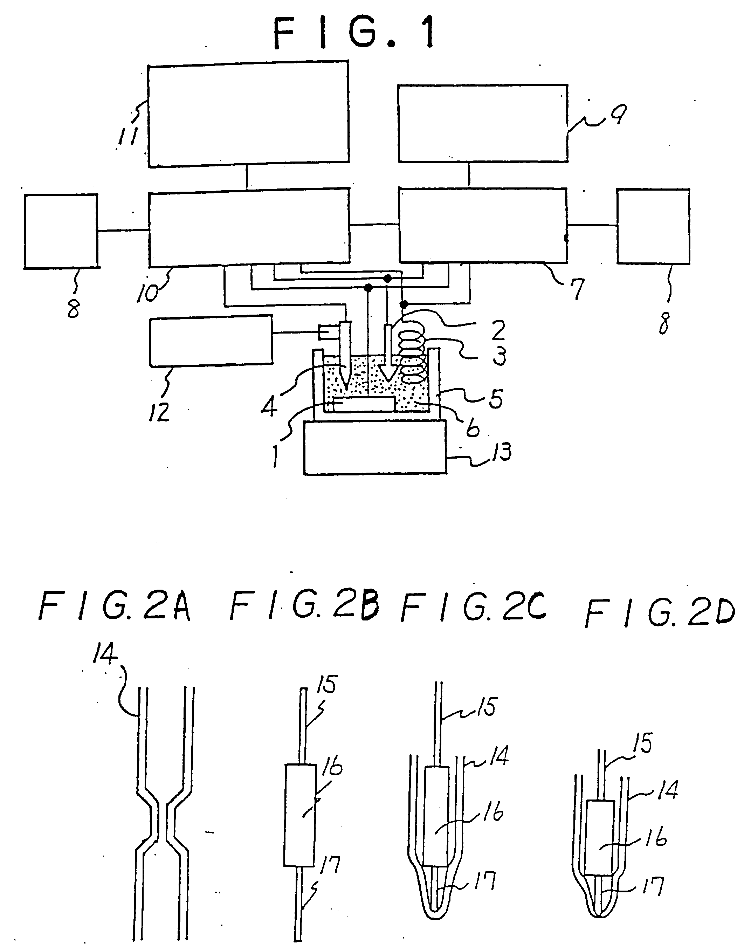

Figure 1 is a schematic view of apparatus according to the invention for detecting both tunnel current and electro-chemical reaction. The apparatus comprises an electro-chemical cell including a sample 1 to be investigated, a reference electrode 2, a counter electrode 3 and a scanning tip 4 in a container 5 filled with a solution 6. The sample 1 may be a conductive material, a conductive material covered with a modified electrode or the like. The reference electrode 2 is one generally used in electro-chemistry and comprises an SCE and a silver-silver halide electrode. The scanning tip 4 may be made from various materials generally used in scanning tunnelling microscopy, for example, platinum or tungsten. However, in the present invention, current flow between the sample 1 and the scanning tip 4 must be mainly tunnel current and there must be minimal current flow due to electro-chemical reaction. For this purpose, the scanning tip is covered with an insulating material except for a very minute portion at its extremity. (The production of the scanning tip 4 will be described in detail with reference to Figure 2). The electro-chemical cell is mounted on an anti-vibrator stand 13 in order to prevent variations in the distance between the scanning tip 4 and the sample 1 caused by external factors such as vibration.

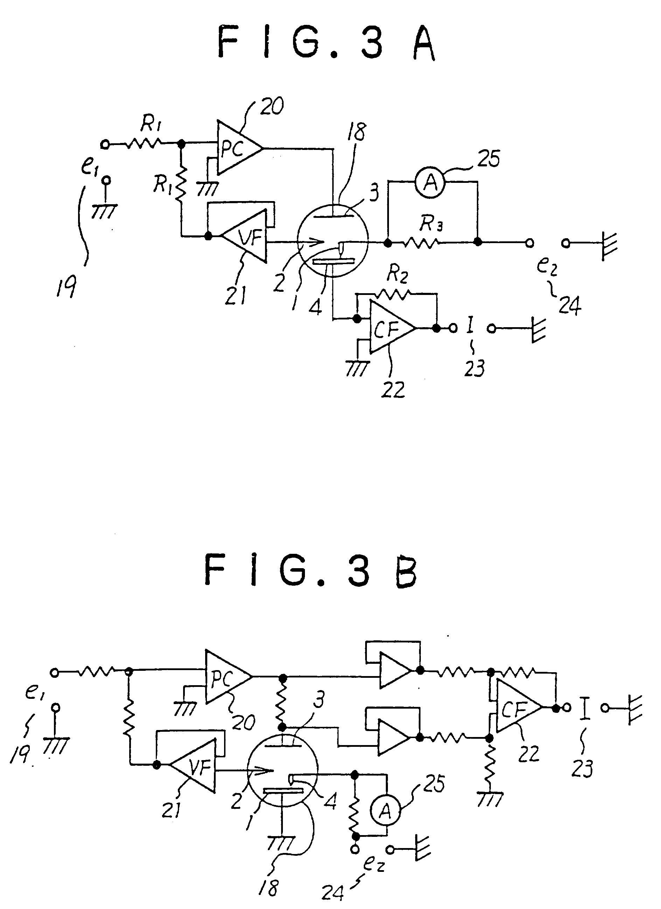

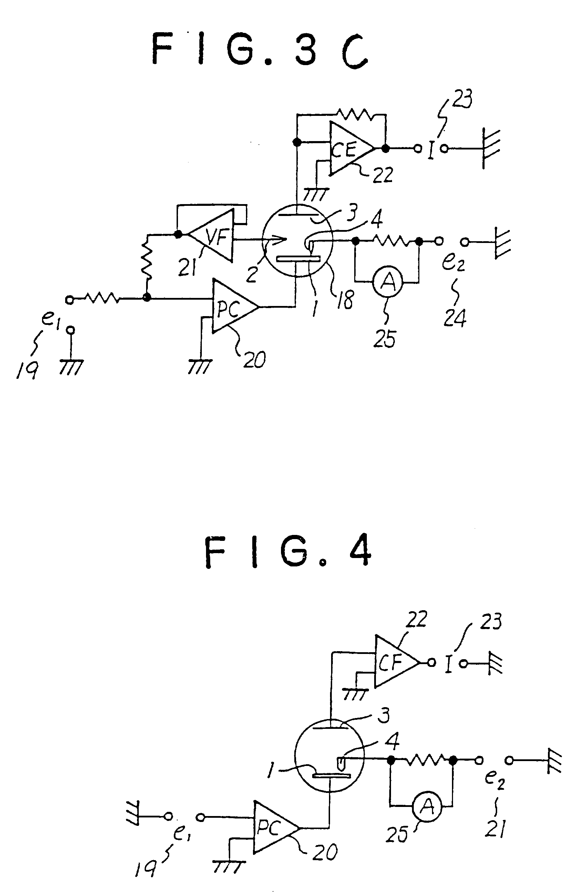

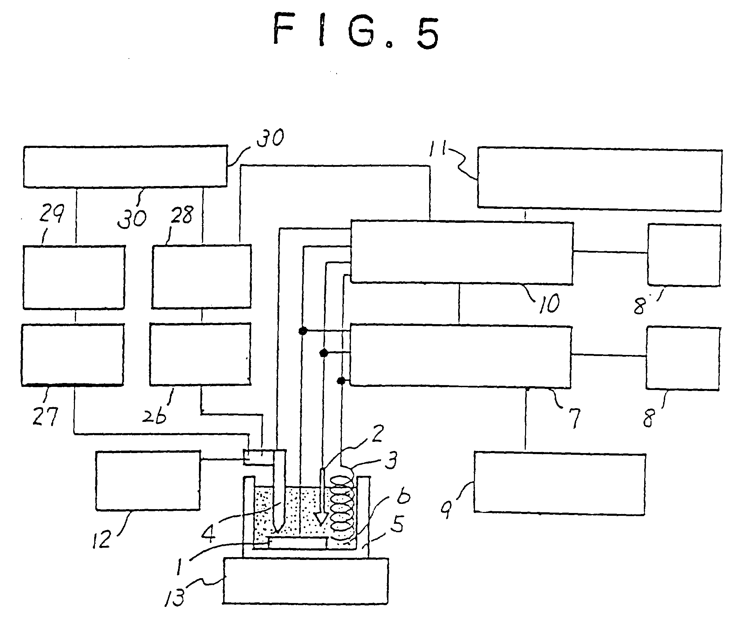

The sample 1, the reference electrode 2 and the counter electrode 3 are connected to a sample potential controlling and current detecting circuit 7 for controlling the electrode potential of the sample and for detecting current flow between the counter electrode and the sample. Voltage is supplied from a power supply 8 to set the electrode potential of the sample 1 for electro-chemical measurement. The sample potential controlling and current detecting circuit 7 is connected to a sample potential and current recording circuit 9 for recording electro-chemical reaction, e.g. as a potential current curve. The scanning tip 4, the sample 1, the reference electrode 2 and the counter electrode 3 are connected to a potential difference controlling and tunnel current detecting circuit 10. The circuit 10 also receives voltage from the power supply 8, and it sets the potential difference between the scanning tip 4 and the sample 1 and detects a tunnel current in a circuit including both the circuit 10 and the circuit 7. The circuitry of the sample potential controlling and current detecting circuit 7 and the potential difference controlling and tunnel current detecting circuit 10 is an important feature of the present invention and will be described in detail with reference to Figures 3 and 4. The potential difference controlling and tunnel current detecting circuit 10 is connected to a potential difference recording circuit 11 for recording the potential difference between the scanning tip 4 and the sample 1. A coarse adjustment mechanism 12 is provided for adjusting the scanning tip 4 to a position at a distance from the sample 1 which allows a tunnel current to flow therebetween. A micrometer may be used as the coarse adjustment mechanism 12.

As described above, the scanning tip 4 may be made from various materials generally used in scanning tunnelling microscopy, such as platinum and tungsten. However, the scanning tip must be designed to minimise any current flow therethrough in connection with electro-chemical reaction, thereby ensuring that the scanning tip carries mainly tunnel current. For this purpose, the scanning tip is covered with an insulating material except for a very minute portion at its end. As an example, the steps involved in producing a platinum scanning tip are shown in Figure 2.

Firstly, a glass capillary tube 14 having an inner diameter of about 1 mm is heated to form a narrow neck portion as shown in Figure 2A. A Cu wire 15 and a W wire 16 are next spot welded to each other, and a Pt wire 17 having a diameter of about 50 microns is welded to the wire 16 as shown in Figure 2B. The product obtained in this step is inserted into the glass capillary tube 14 obtained in the first step, and the narrow neck portion is heat sealed as shown in Figure 2C. The resulting end portion of the capillary tube 14 is now ground so as to expose a very minute amount of platinum as shown in Figure 2D. When the thus produced scanning tip was used in a 0.05 M sulphuric acid solution to detect a tunnel current of 4 nA, which is a typical tunnel current value, the background current flowing through the scanning tip due to the electro-chemical reaction with the solution was about 0.2 nA, which was about 5% of the tunnel current value and therefore negligibly small.

Figures 3A to 3C show examples of circuits for setting the potential of the sample 1, setting the potential of the scanning tip 4 and measuring the tunnel current, respectively, by using four electrodes represented by the sample 1, the reference electrode 2 and the counter electrode 3 and the scanning tip 4. This circuitry will be explained in detail with reference to Figure 3B, the circuits of Figures 3A and 3C being generally similar. In an electro-chemical cell 18 composed of the four electrodes provided by the sample 1, the reference electrode 2, the counter electrode 3 and the scanning tip 4, a voltage value e₁ applied at a voltage input 19 is supplied to a voltage follower 21 and a potentiostat 20 for setting the electrode potential of the sample at e₁ with respect to the reference electrode 2.

The current flowing due to the electro-chemical reaction taking place at this electrode potential is detected from a sample current output 23 through a current follower 22. Consequently, by supplying the values obtained at the voltage input 19 and the sample current output 23 to the recording circuit 9, the electro-chemical reaction can be measured, e.g. the potential current curve of the sample 1 can be obtained.

A voltage e₂ is applied to a voltage input 24 to set the electrode voltage of the scanning tip 4 at e₁ + e₂ with respect to the reference electrode 2. The tunnel current flowing between the scanning tip 4 and the sample 1 due to the potential difference between the scanning tip and the sample is measured from a tunnel current output 25. Consequently, by supplying the values obtained at the voltage input 24 and the tunnel current output 25 to the recording circuit 11, the potential difference between the scanning tip 4 and the sample 1 can be measured. Thus, both tunnel current measurement and electro-chemical measurement are simultaneously possible. In this case, if a function generator is used to supply the voltage input 19, scanning of the electrode potential of the sample 1 is possible. On the other hand, if a function generator is used at the current output 24, it is easy to vary the potential difference between the sample 1 and the scanning tip 4.

In a modification of the above circuitry, the reference electrode 2 and the counter electrode 3 are united into one electrode. In the present apparatus, it is advantageous for the electro-chemical cell to be simplified as much as possible. For this purpose, the number of the electrodes is preferably minimised. However, if the reference electrode 2 is omitted altogether, the setting of the electrode voltage in electro-chemical measurement becomes difficult. To solve this problem, the reference electrode 2 and the counter electrode 3 are united into one (hereinafter referred to as the "counter electrode" in this embodiment). The conditions for the counter electrode in this instance are that it shows a reversible potential which is stable for a long time, that the potential is changed to a negligibly small extent by the current flowing between the sample and the counter electrode during electro-chemical measurement, and that even when a minute amount of current flows in the counter electrode and the potential is changed, the potential is immediately restored to the original value without showing hysteresis. The following two electrodes were tested for satisfying the above conditions. One was a silver electrode used when silver ions existed in the solution. The electrode became a silver-silver ion electrode and was stably driven. The other was a silver wire used when the solution contained halogen ions. The silver wire became a silver-halogen electrode and was stably driven. Other electrodes satisfying the above conditions may also be used as the counter electrode.

Circuitry employing three electrodes represented by the sample 1, the scanning tip 4 and the counter electrode 3 (serving also as the reference electrode as described above) is shown in Figure 4. This circuitry is basically realised by short circuiting the counter electrode 3 and the reference electrode 2 of the circuitry shown in Figures 3A and 3B. However, the circuit shown in Figure 4 is further simplified in comparison with the circuits shown in Figure 3 in that the voltage follower is removed in this embodiment. When the potential of the counter electrode 3 (serving also as the reference electrode) is stable, the electrode potential of the sample 1 is set at e₁ with respect to the counter electrode 3, and the electrode potential of the scanning tip 4 is set at e₂ with respect to the counter electrode. As a result, the potential difference between the scanning tip 4 and the sample 1 becomes e₂ - e₁, and the tunnel current corresponding to this potential difference may be detected.

Figure 5 shows an application of the apparatus of Figure 1 in a scanning tunnelling microscope. The operation of such apparatus has already been described and so only the additional features of Figure 5 will be explained. The scanning tip 4 is brought close to the sample 1 by the coarse adjustment mechanism 12 to a distance which allows a tunnel current to flow therebetween. The scanning tip 4 is additionally connected in this instance to a fine adjustment mechanism 26 for making adjustments in the direction of the Z axis and an adjustment mechanism 27 for making adjustments in the directions of the X and Y axes. These fine adjustment mechanisms 26 and 27 include piezo-electric elements so that the scanning tip 4 may be moved by the application of a voltage. The distance of each movement can be represented as a function of the voltage. The fine adjustment mechanism 26 is thus connected to a controller 28 for controlling the voltage representing movement in the direction of the Z axis and the fine adjustment mechanism 27 is connected to a controller 29 for controlling the voltage representing movement in the directions of the X and Y axes. The controller 28 adjusts the voltage being applied to the fine adjustment mechanism 26 so that the tunnel current detected by the potential difference controlling and tunnel current detecting circuit 10 is constant, the fine adjustment mechanism 26 controlling the vertical movement of the scanning tip 4 accordingly. On the other hand, the controller 29 controls the voltage applied to the fine adjustment mechanism 27 to enable the scanning tip 4 to scan the surface of the sample 1 in a plane. A microcomputer 30 processes the voltages applied by the controller 29 and the controller 28 so as to represent them as the three dimensional position of the scanning tip 4, thereby providing a surface image of the sample 1.

It is thus possible to fix the electrode potential of the scanning tip 4 relative to the sample and to form the surface image of the sample and when the electrode potential of the sample relative to the counter electrode 3 is scanned, the formation of the surface image of the sample becomes simultaneous with the electro-chemical measurement.

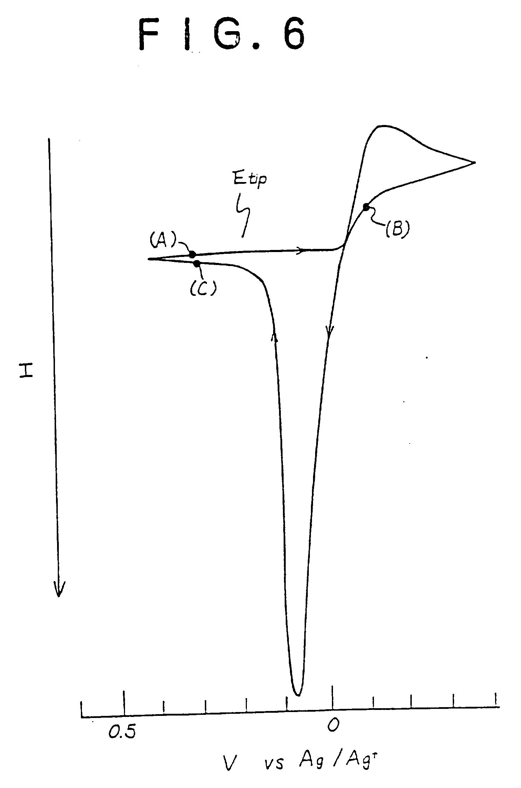

In a test of the apparatus of the present invention, HOPG (high order pyrolytic graphite) was used for the sample 1 and a coiled silver wire was used as the counter electrode 3 (serving also as the reference electrode). The scanning tip 4 was as shown in Figure 2. The container 5 was filled with a solution of silver perchloride and the HOPG sample 1, the silver wire as the counter electrode 3 and the scanning tip 4 were placed in the solution to constitute an electro-chemical cell. In this case, silver ions existed in the solution, and the silver wire acted as a silver-silver ion electrode. The circuitry shown in Figure 4 was employed for tunnel current measurement and electro-chemical measurement in the scanning tunnelling miscroscope described with reference to Figure 6.

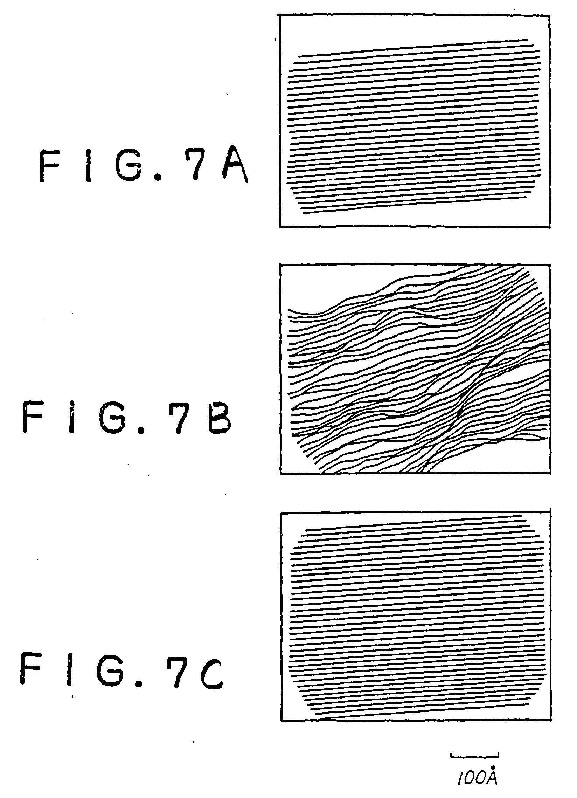

The results are shown in Figures 6 and 7. The electrode potential of the HOPG sample 1 was first fixed at 0.3 V with respect to the silver-silver ion counter electrode 3 (the point (A) in Figure 6). The electrode potential of the scanning tip 4 relative to the sample 1 was also fixed at 0.23 Vvs Ag/Ag+ and the surface of the sample 1 was scanned by the scanning tip 4. The surface image formed in this way is shown in Figure 7A. At this electrode potential for the sample 1, the image of the surface of the sample 1 shows no deposition of silver. Subsequently, the electrode potential of the sample 1 relative to the counter electrode 3 was scanned in the negative direction to generate the potential current curve shown in Figure 6. In the vicinity of -0.05 Vvs Ag/Ag+, a negative current flows and silver begins to be separated. In the vicinity of -0.35 Vvs Ag/Ag+, the potential scanning was reversed and the electrode potential of the sample 1 relative to the counter electrode 3 was again fixed in the vicinity of -0.10 Vvs Ag/Ag+ (the point (B) in Figure 6). At this potential, the scanning tip 4 was scanned over the sample 1. The surface image of the sample 1 thus obtained is shown in Figure 7B. Unlike the surface image of the sample 1 shown in Figure 7A, the deposition of silver was observed. When the electrode potential of the sample 1 relative to the counter electrode 3 was scanned further in the positive direction (Figure 6), a positive current flowed and the deposited silver began to dissolve. At the potential at which the current value decreases (the point (C) in Figure 6), the potential was again fixed and the scanning tip 4 was scanned over the sample 1 to form the surface image shown in Figure 7C. In agreement with the cyclic voltammogram shown in Figure 6, the solution of the silver was confirmed.

As described, the apparatus of the present invention enables simultaneous detection of a tunnel current and an electro-chemical reaction and enables the surface image of a sample to be formed by using the detected tunnel current.

Tunnel current may be measured simultaneously with electro-chemical measurement and the surface image of the sample may be obtained by scanning the surface of the sample while maintaining the detected tunnel current constant. As a result, an electro-chemical reaction can be analysed in combination with the structure of an electrode surface. Thus, the present invention may advantageously be employed in the electrolytic industry, in anti-corrosion and surface treatment techniques, in the plating industry, and in the semi-conductor industry.

## Claims

1. Apparatus for detecting both electro-chemical reaction and tunnel current, comprising an electro-chemical cell (5) within which are disposed at least one electrode (2, 3) and a scanning tip (4) arranged to co-operate, in use, with a sample (1) in a solution (6) in the electro-chemical cell and to generate a first output representing current flowing between the sample (1) and the electrode (2, 3) due to electro-chemical reaction within the cell and a second output representing a tunnel current flowing between the scanning tip (4) and the sample (1), and means (7, 10) for detecting the first and second outputs, wherein means (7) for controlling a potential of the sample (1) relative to the electrode (2, 3) and means (10) for controlling a potential of the scanning tip (4) relative to the electrode (2, 3), are provided to maintain the tunnel current constant while scanning the surface of the sample simultaneously with detecting the electro-chemical reaction.

2. Apparatus according to claim 1, characterised by means (12) for positioning the scanning tip close to the sample to enable tunnel current to flow between the scanning tip and the sample.

3. Apparatus according to any preceding claim, characterised by first fine adjustment means (26) for adjusting the position of the scanning tip vertically relative to the sample surface, first fine adjustment control means (28) for controlling the distance between the scanning tip and the sample surface so as to maintain the detected second output substantially constant, second fine adjustment means (27) for adjusting the position of the scanning tip in a plane perpendicular to the vertical direction, second fine adjustment control means for controlling scanning of the scanning tip over the sample surface, and means (30) for graphically displaying the spatial co-ordinates of the scanning tip to produce a topological map of the sample surface.

4. Apparatus according to any preceding claim, characterised in that at least one electrode comprises a reference electrode (2) and a counter electrode (3).

5. Apparatus according to claim 4, characterised in that the reference electrode and the counter electrode are united into one electrode.

6. A method for detecting both electro-chemical reaction and tunnel current in an electro-chemical cell (5) containing at least one electrode (2, 3), a scanning tip (4) and a sample (1) in a solution (6), comprising generating a first output representing current flowing between the sample and the electrode due to electro-chemical reaction within the cell, generating a second output representing a tunnel current flowing between the scanning tip and the sample, and detecting the first and second outputs; wherein a potential of the sample (1) relative to the electrode (2, 3) and a potential of the scanning tip (4) relative to the electrode (2, 3) are controlled in order to maintain the tunnel current constant while scanning the surface of the sample simultaneously with detecting the electro-chemical reaction.

## Patentansprüche

1. Vorrichtung zum Erfassen sowohl einer elektrochemischen Reaktion als auch eines Tunnelstroms, umfassend eine elektrochemische Zelle (5), innerhalb der wenigstens eine Elektrode (2, 3) und eine Abtastspitze (4) angeordnet sind, welche dazu eingerichtet sind, in Betrieb, mit einer Probe (1) in einer Lösung (6) in der elektrochemischen Zelle zusammenzuwirken und eine erste Ausgabe zu erzeugen, welche einen zwischen der Probe (1) und der Elektrode (2, 3) aufgrund elektrochemischer Reaktion in der Zelle fließenden Strom darstellt, und eine zweite Ausgabe zu erzeugen, welche einen zwischen der Abtastspitze (4) und der Probe (1) fließenden Tunnelstrom darstellt, und Mittel (7, 10) zum Erfassen der ersten und der zweiten Ausgabe, wobei Mittel (7) zum Steuern eines Potentials der Probe (1) relativ zur Elektrode (2, 3) und Mittel (10) zum Steuern eines Potentials der Abtastspitze (4) relativ zur Elektrode (2, 3) vorgesehen sind, um beim Abtasten der Oberfläche der Probe gleichzeitig mit dem Erfassen der elektrochemischen Reaktion den Tunnelstrom konstant zu halten.

2. Vorrichtung nach Anspruch 1, gekennzeichnet durch Mittel (12) zum Positionieren der Abtastspitze in der Nähe der Probe, um einen Tunnelstrom zwischen der Abtastspitze und der Probe zu ermöglichen.

3. Vorrichtung nach einem der vorhergehenden Ansprüche, gekennzeichnet durch erste Feineinstellungsmittel (26) zum vertikalen Einstellen der Position der Abtastspitze relativ zur Probenoberfläche, erste Feineinstellungssteuermittel (28) zum Steuern des Abstands zwischen der Abtastspitze und der Probenoberfläche, um die erfaßte zweite Ausgabe im wesentlichen konstant zu halten, zweite Feineinstellmittel (27) zum Einstellen der Positon der Abtastspitze in einer Ebene orthogonal zur Vertikalrichtung, zweite Feineinstellungssteuermittel zum Steuern des Abtastens der Abtastspitze über der Probenoberfläche und Mittel (30) zum graphischen Anzeigen der räumlichen Koordinaten der Abtastspitze, um eine topologische Abbildung der Probenoberfläche zu erzeugen.

4. Vorrichtung nach einem der vorhergehenden Ansprüche, dadurch gekennzeichnet, daß wenigstens eine Elektrode eine Referenzelektrode (2) und eine Gegenelektrode (3) umfaßt.

5. Vorrichtung nach Anspruch 4, dadurch gekennzeichnet, daß die Referenzelektode und die Gegenelektrode in eine Elektrode zusammengefaßt sind.

6. Verfahren zum Erfassen sowohl einer elektrochemischen Reaktion als auch eines Tunnelstroms in einer elektrochemischen Zelle (5) mit wenigstens einer Elektrode (2, 3), einer Abtastspitze (4) und einer Probe (1) in einer Lösung (6), umfassend das Erzeugen einer ersten Ausgabe, welche den zwischen der Probe und der Elektrode aufgrund elektrochemischer Reaktion in der Zelle fließenden Strom darstellt, das Erzeugen einer zweiten Ausgabe, welche einen zwischen der Abtastspitze und der Probe fließenden Tunnelstrom darstellt, und das Erfassen der ersten und der zweiten Ausgabe; wobei ein Potential der Probe (1) relativ zur Elektrode (2, 3) und ein Potential der Abtastspitze (4) relativ zur Elektrode (2, 3) gesteuert werden, um den Tunnelstrom konstant zu halten, während die Oberfläche der Probe abgetastet wird und gleichzeitig die elektrochemische Reaktion erfaßt wird.

## Revendications

1. Appareil pour détecter à la fois une réaction chimique et un courant tunnel, comprenant une cellule électrochimique (5) à l'intérieur de laquelle sont disposées au moins une électrode (2, 3) et une pointe d'exploration (4) agencée pour coopérer, en service, avec un échantillon (1) placé dans une solution (6) à l'intérieur de la cellule électrochimique, et pour former une première sortie représentant un courant circulant entre l'échantillon (1) et l'électrode (2, 3) du fait d'une réaction électrochimique à l'intérieur de la cellule, et une seconde sortie représentant un courant tunnel circulant entre la pointe d'exploration (4) et l'échantillon (1), ainsi que des moyens (7, 10) pour détecter la première et la seconde sorties, dans lequel un moyen (7) pour commander un potentiel de l'échantillon (1) par rapport à l'électrode (2, 3) et un moyen (10) pour commander un potentiel de la pointe d'exploration (4) par rapport à l'électrode (2, 3), sont prévus pour maintenir le courant tunnel constant pendant l'exploration de la surface de l'échantillon effectuée simultanément avec la détection de la réaction électrochimique.

2. Appareil selon la revendication 1, caractérisé par des moyens (12) pour positionner la pointe d'exploration près de l'échantillon et permettre à un courant tunnel de circuler entre la pointe d'exploration et l'échantillon.

3. Appareil selon l'une quelconque des revendications précédentes, caractérisé par un premier moyen de réglage fin (26) pour ajuster la position de la pointe d'exploration verticalement par rapport à la surface de l'échantillon, un premier moyen de commande de réglage fin (28) pour commander la distance entre la pointe d'exploration et la surface de l'échantillon de manière à maintenir la seconde sortie sensiblement constante, un second moyen de réglage fin (27) pour ajuster la position de la pointe d'exploration dans un plan perpendiculaire à la direction verticale, un second moyen de réglage pour commander l'exploration de la pointe d'exploration sur la surface de l'échantillon, et un moyen (30) pour représenter graphiquement les coordonnées spatiales de la pointe d'exploration et établir une représentation topologique de la surface de l'échantillon.

4. Appareil selon l'une quelconque des revendications précédentes, caractérisé en ce qu'une électrode au moins comprend une électrode de référence (2) et une contre-électrode (3).

5. Appareil selon la revendication 4, caractérisé en ce que l'électrode de référence et la contre-électrode sont réunies en une seule électrode.

6. Procédé de détection à la fois d'une réaction chimique et d'un courant tunnel dans une cellule électrochimique (5) contenant au moins une électrode (2, 3), une pointe d'exploration (4) et un échantillon (1) placé dans une solution (6), comprenant la génération d'une première sortie représentant un courant circulant entre l'échantillon et l'électrode du fait d'une réaction électrochimique à l'intérieur de la cellule, la génération d'une seconde sortie représentant un courant tunnel circulant entre la pointe d'exploration et l'échantillon, et la détection de la première et de la seconde sorties ; dans lequel un potentiel de l'échantillon (1) par rapport à l'électrode (2, 3), et un potentiel de la pointe d'exploration (4) par rapport à l'électrode (2, 3), sont commandés de manière à maintenir constant le courant tunnel pendant l'exploration de la surface de l'échantillon simultanément à la détection de la réaction électrochimique.
